# EUROPEAN PATENT SPECIFICATION

(11) **EP 3 083 042 B1**
(45) Date of publication and mention of the grant of the patent: **18.12.2019**
(21) Application number: 14815927.0
(22) Date of filing: 30.09.2014
(51) Int. Cl.: B01J 29/06, B01J 3/00, B01J 29/064, B01J 29/076, B01J 29/08, B01J 29/10, B01J 29/16, C10G 47/16, B01J 37/14, B01J 35/00, B01J 35/02, B01J 37/00

(54) **METHOD FOR HYDROCRACKING CATALYST SYNTHESIS USING SUPERCRITICAL CO2**
VERFAHREN ZUR HYDROCRACK-KATALYSATORSYNTHESE MITTELS SUPERKRITISCHEN CO2
PROCÉDÉ POUR SYNTHÈSE DE CATALYSEUR D'HYDROCRAQUAGE À L'AIDE DE CO2 SUPERCRITIQUE

(30) Priority: 17.12.2013 TR 201314846
(43) Date of publication of application: 26.10.2016
(73) Proprietor: Turkiye Petrol Rafinerileri Anonim Sirketi Tupras, 41780 Kocaeli (TR)
(72) Inventor: KARTAL BERKER, Ayse Meric, 34742 Istanbul (TR); ERKEY, Can, 34450 Istanbul (TR); BOZBAG, Selmi Erim, CH-5234 Villigen (CH)
(74) Representative: Cayli, Hülya
(86) International application number: PCT/TR2014/000357
(87) International publication number: WO 2015/094134

(56) References cited:
- CN-A- 102 101 679
- HIROAKI WAKAYAMA ET AL: "Preparation of Nanoparticles in Nanoporous Silica, FSM-16", JOURNAL OF CHEMICAL ENGINEERING OF JAPAN, SOCIETY OF CHEMICAL ENGINEERS, JP, vol. 42, no. 2, 20 February 2009 (2009-02-20), pages 134-138, XP009183657, ISSN: 0021-9592, DOI: 10.1252/JCEJ.08WE147
- QIN-QIN XU ET AL: "Controlled synthesis of Ag nanowires and nanoparticles in mesoporous silica using supercritical carbon dioxide and co-solvent", JOURNAL OF SUPERCRITICAL FLUIDS, PRA PRESS, US, vol. 62, 9 December 2011 (2011-12-09), pages 184-189, XP028439946, ISSN: 0896-8446, DOI: 10.1016/J.SUPFLU.2011.12.008 [retrieved on 2011-12-19]
- YANHUA ZHANG ET AL: "Nanocasting Synthesis of Mesostructured CoOvia a Supercritical CODeposition Method and the Catalytic Performance for CO Oxidation", CATALYSIS LETTERS, KLUWER ACADEMIC PUBLISHERS-PLENUM PUBLISHERS, NE, vol. 142, no. 2, 30 November 2011 (2011-11-30), pages 275-281, XP035010123, ISSN: 1572-879X, DOI: 10.1007/S10562-011-0748-2
- QIN-QIN XU ET AL: "Preparation of Superhighly Dispersed Co 3 O 4 @SBA-15 with Different Morphologies in Supercritical CO 2 with the Assistance of Dilute Acids", INDUSTRIAL & ENGINEERING CHEMISTRY RESEARCH, vol. 53, no. 25, 25 June 2014 (2014-06-25) , pages 10366-10371, XP055181725, ISSN: 0888-5885, DOI: 10.1021/ie501241f

## Description

### Field of the Invention

The present invention relates to a synthesis method of hydrocracking catalysts used in hydrocracking units wherein cracking of petroleum products is performed.

### Prior Art

In hydrocracker units of petroleum refineries, crude hydrocarbon is cracked in the presence of hydrogen at high temperature and under pressure so as to be converted into valuable fuels such as diesel, gasoline and jet fuel. This conversion is carried out by a catalyst used with hydrogen. Hydrocracking catalysts mainly have two functions in a hydrocracking unit. The first one is to perform cracking and the other one is to perform hydrogenation/dehydrogenation. In order to synthesize hydrocracking catalysts, a porous support material is made to adsorb metal compounds. This is called as impregnation in the prior art. After impregnation process, the support material is subjected to a calcination process so as to allow oxidation of the adsorbed metals, and the synthesis is thus completed. The support material generally comprises materials such as silica-alumina and zeolite, and due to acidic characteristics of the said materials, cracking is performed. Moreover, materials adsorbed into the support material are generally selected from Group VIB and VIII elements of the periodic table, whereby hydrogenation/dehydrogenation processes are performed.

In prior art, said adsorption of metal compounds into the support material is performed by dissolution of metals in the presence of various solvents. US4431516A describes the use of ammonia for dissolution of metals. However, in embodiments utilizing ammonia as the solvent, ammonia steam is generated in the calcination stage, which is harmful for health. Furthermore, the use of phosphoric acid, hydrochloric acid, nitric acid, sulphuric acid, citric acid, tartaric acid, oxalic acid, malonic acid and malic acid as the solvent is also known in the prior art. However, said acids also generate harmful waste in the calcination stage.

Furthermore, said document does not disclose how the waste generated in the manufacturing of the catalyst is disposed of

In the state-of-art, the article "Preparation of Nanoparticles in Nanoporous Silica, FSM-16" by Wakayama et al. (J. Chem. Eng. Japan, Vol. 42, No. 2, p. 134, 2009) discloses a preparation method of size controlled nanoparticles in micro- and mesoporous silicas with different pore sizes by using supercritical CO₂ fluids. The article "Controlled synthesis of Ag nanowires and nanoparticles in mesoporous silica using supercritical carbon dioxide and co-solvent" by Xu et al. (J. of Supercritical Fluids 62 (2012) 184-189) discloses the synthesis of mesoporous silica supported silver nanocomposites prepared using supercritical carbon dioxide as solvent and ethanol or ethylene glycol as co-solvent. The patent document CN102101679A relates to the modification of natural zeolite material, and a method for preparing a titanium-silicalite molecular sieve from natural zeolite through supercritical replacement and modification. The method disclosed in the patent document comprises performing ion exchange treatment on the natural zeolite; treating by using a chemical dealumination method, and performing supercritical replacement reaction; putting the zeolite subjected to chemical dealumination treatment on the upper part of an autoclave; and ensuring that the zeolite is not directly contacted with carbon dioxide or an organic solvent; regulating the pressure and temperature until the pressure and the temperature are higher than critical parameters of the carbon dioxide or the organic solvent for reaction, and after the reaction is finished; washing the sample by using the carbon dioxide or the organic solvent and drying; and calcining in air to obtain the titanium-silicalite molecular sieve. The article "Nanocasting Synthesis of Mesostructured Co3O4 via a Supercritical CO2 Deposition Method and the Catalytic Performance for CO Oxidation" by Zhang et al. (Catal. Lett. (2012) 142:275-281) discloses a method for preparing Co₃O₄ on SBA-15. The documents in the state of art fail to disclose synthesising a hydrocracking catalyst to be used in a petroleum refinery and solution for the problems that occur during the production of hydrocracking catalysts and using a zeolite pellet as support material. Moreover, none of these documents explain using at least one metal selected from Ni and/or W as metal precursor.

### Brief Description of the Invention

With the present invention, there is provided a method for synthesis of a hydrocracking catalyst using a synthesis system as claimed in the appended claims by using at least one support material in the form of a zeolite pellet and at least one metal precursor comprising Ni and/or W to be adsorbed into the support material. The said synthesis system comprises at least one high-pressure container into which the support material and the metal precursor are placed and having at least one body resistant to high pressure; at least one carbon dioxide source for supplying carbon dioxide gas into the high-pressure container; at least one pump for delivering the carbon dioxide supplied to the high-pressure container under a pressure allowing it to transform into the supercritical phase; at least one temperature regulation unit regulating the temperature of the high-pressure container so as to bring the carbon dioxide supplied to the high-pressure container to a temperature allowing it to transform into the supercritical phase; at least one heating furnace wherein the support material is heated and subjected to calcination after the said metal precursor is dissolved in the carbon dioxide in the supercritical phase and adsorbed into the support material.

The said synthesis method comprises the steps of introducing the metal precursor and the support material into the high-pressure container; supplying the carbon dioxide received from the carbon dioxide source by means of the pump into the high-pressure container under a pressure allowing it to transform into the supercritical phase; bringing the carbon dioxide in the high-pressure container to a temperature allowing it to transform into the supercritical phase by the temperature regulation unit so that the metal precursor in the high-pressure container is dissolved in carbon dioxide and adsorbed by the support material; heating of the support material in the said furnace and subjecting same to calcination so as to allow the metal precursor adsorbed by the support material to oxidize.

In the synthesis system used in the hydrocracking catalyst synthesis method of the present invention, carbon dioxide in the supercritical phase is used as the solvent. The thermo-physical properties of the supercritical carbon dioxide, as in other fluids in the supercritical phase, are liquid-like density and gas-like viscosity values. These properties may vary in a wide range due to slight changes in the temperature and pressure, close to the critical point of the carbon dioxide. The liquid-like density imparts the supercritical fluid the required dissolution capacity whereas gas-like viscosity values provide a higher diffusion rate than liquids. For these reasons, the fluids in the supercritical phase, with their favorable effect on the mass transfer due to the high dissolution capacity as well as their low viscosity, are advantageous, when used as solvents, in improving deposition kinetics as opposed to other conventional solvent methods. Moreover, in the synthesis system used in the synthesis method of the present invention, carbon dioxide that transforms from the supercritical phase into the gaseous phase is generated as waste. Therefore, the problem of disposal of the waste is not encountered.

### Object of the Invention

An object of the present invention is to provide a method for synthesis of hydrocracking catalysts used in hydrocracking units.

Another object of the present invention is to provide a method not generating harmful waste in synthesizing of the hydrocracking catalyst.

Still another object of the present invention is to provide a method wherein cracking feature of the synthesized hydrocracking catalyst is enhanced.

### Description of the Drawings

The exemplary embodiments of the hydrocracking catalyst synthesis according to the present invention are illustrated in the enclosed drawings, in which:
Figure 1 is a block diagram of the hydrocracking catalyst synthesis system.
Figure 2 is a side sectional view of a high-pressure container used in the hydrocracking catalyst synthesis system.
Figure 3 is a block diagram of the hydrocracking catalyst synthesis method.

All the parts illustrated in the figures are individually assigned a reference numeral and the corresponding terms of these numbers are listed as follows:

| | |
|---|---|
| Synthesis system | (S) |
| High-pressure container | (1) |
| Carbon dioxide source | (2) |
| Pump | (3) |
| Inlet valve | (4) |
| Mixer | (5) |
| Temperature regulation unit | (6) |
| Outlet valve | (7) |
| Temperature sensor | (8) |
| Pressure sensor | (9) |
| Cover | (10) |
| Fluid inlet | (11) |
| Fluid outlet | (12) |
| Body | (13) |
| Carbon dioxide inlet | (14) |
| Carbon dioxide outlet | (15) |
| Disintegration disc | (16) |
| Support material | (17) |
| Metal precursor | (18) |
| Placement of the metal precursor and support material | (a) |
| Adsorption of the metal precursor | (b) |
| Calcination | (c) |

### Description of the Invention

In petroleum refineries, hydrocracking units are used that crack petroleum products and convert them into different products. Hydrocracking units comprise hydrocracking catalysts for performing cracking and hydrogenation/dehydrogenation processes. During the synthesis of said catalysts, a metal precursor is dissolved in a solution and adsorbed into a support material and then the support material is subjected to calcination. The solvents employed in the dissolution process transform into the gaseous phase in the calcination process, thereby threatening human health. Moreover, in the traditional methods, the waste resulting from the dissolution process must be eliminated. Therefore, there is provided with the present invention a hydrocracking catalyst synthesis method wherein generation of harmful waste is prevented.

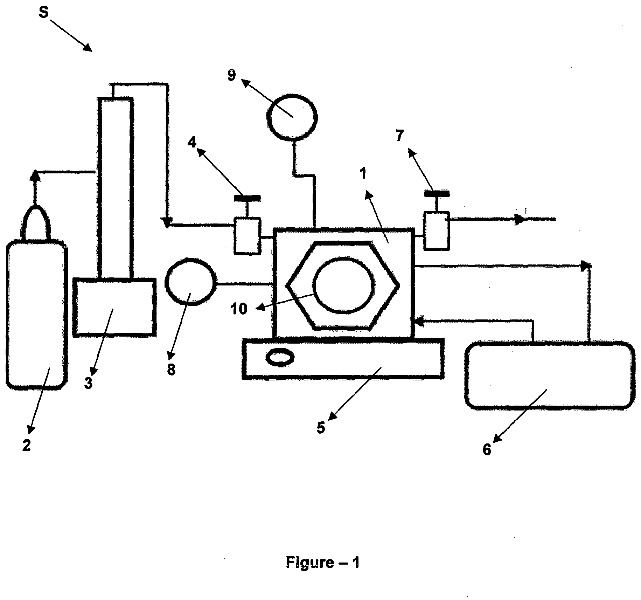

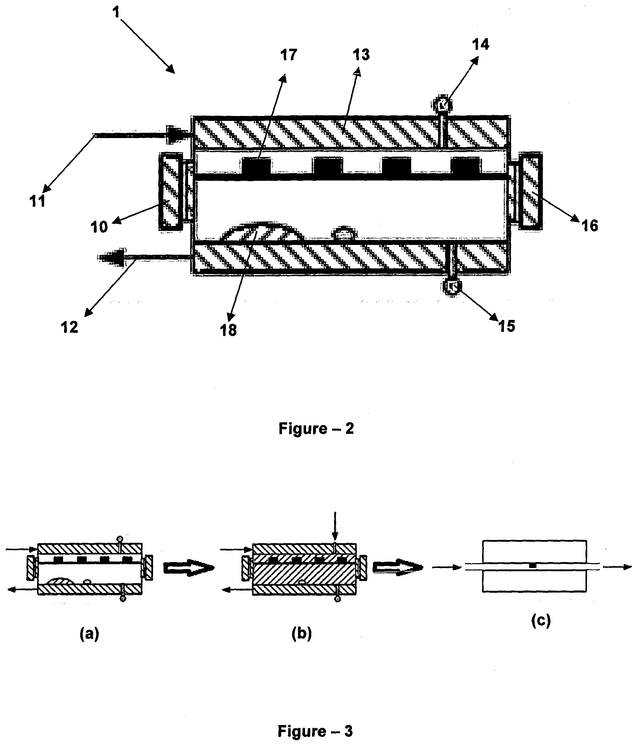

The synthesis system (S) used in the hydrocracking catalyst synthesis method according to the present invention and illustrated in Figures 1 and 2 comprises at least one high-pressure container (1) into which at least one support material (17) and at least one metal precursor (18) to be adsorbed on the support material (17) are placed and having at least one body (13) resistant to high-pressure (preferably up to 350 bar); at least one carbon dioxide source (2) for supplying carbon dioxide gas into the high-pressure container (1); at least one pump (3) for delivering the carbon dioxide supplied to the high-pressure container (1) under a pressure allowing it to transform into the supercritical phase; at least one temperature regulation unit (6) regulating the temperature of the high-pressure container (1) so as to bring the carbon dioxide supplied to the high-pressure container (1) to a temperature allowing it to transform into the supercritical phase; at least one heating furnace (not shown) wherein the support material (17) is heated and subjected to calcination after the said metal precursor (18) is dissolved in carbon dioxide in the supercritical phase and adsorbed into the support material (17). Also said synthesis system (S) preferably comprises at least one pressure sensor (9) for measuring the internal pressure of the high-pressure container (1). With said pressure sensor (9), internal pressure of the high-pressure container (1) is maintained at desired level.

In the synthesis method according to the present invention using a synthesis system (S) and illustrated in the block diagram of Figure 3, the metal precursor (18) and the support material (17) are introduced (a) into the said high-pressure container (1). The said support material (17) is in the form of a zeolite pellet (more specifically USY (ultra stable y form) zeolite pellet). The metal precursor (18) comprises at least one metal being nickel and/or tungsten. Then, the carbon dioxide received from the carbon dioxide source (2) by means of the said pump (3) is supplied into the high-pressure container (1) at a pressure (i.e. in the range of 180-240 bar, more specifically 208 bar) allowing it to transform into the supercritical phase. With the temperature regulation unit (6), carbon dioxide is brought to a temperature in the high-pressure container (1) that allows it transform into the supercritical phase. After the carbon dioxide transforms into the supercritical phase, the metal precursor (18) inside the high-pressure container (1) dissolves in the carbon dioxide and is adsorbed (b) by the support material (17). After the adsorption is completed, the support material (17) is heated inside the said furnace and subjected to a calcination (c) process and thus the metal precursor (18) adsorbed by the support material (17) is oxidized.

In a preferred embodiment of the invention, the synthesis system (S) used in the catalyst synthesis method comprises at least one mixer (5) mixing the carbon dioxide in the supercritical form and located inside the high-pressure container (1) with the metal precursor (18). Thanks to the mixer (5), the metal precursor (18) is better dissolved in the supercritical carbon dioxide and is better adsorbed by the support material (17). The said mixer (5) is preferably in the form of a magnetic mixer.

In the invention, the high-pressure container (1), as illustrated in Figure 2 in detail, comprises at least one cover (10) including at least one window preferably made of a transparent material (i.e. sapphire glass) and covering at least one opening of the pressure container (1), and at least one disintegration disc (16) covering at least another opening of the pressure container (1). With the said cover (10), the metal precursor (18) and support material (17) may be placed into the high-pressure container (1). Furthermore, since the cover (10) includes a transparent window, adsorption process may be observed externally. And with the said disintegration disc (16), the pressure container (1) is prevented from reaching undesired pressure values.

In another preferred embodiment of the invention, the high-pressure container (1) comprises at least one carbon dioxide inlet (14) through which carbon dioxide is fed and at least one carbon dioxide outlet (15) through which carbon dioxide is output. With said carbon dioxide inlet (14), carbon dioxide coming from the carbon dioxide source (2) is introduced into the high-pressure container (1). And with the carbon dioxide outlet (15), following the adsorption process, carbon dioxide inside the pressure container (1) is output so that internal pressure of the high-pressure container (1) is restored to normal values (pressure at room temperature). Thus, the support material (17) is taken from the high-pressure container (1) and sent to the said furnace. In this embodiment, the synthesis system (S) also comprises at least one inlet valve (4) connected to the carbon dioxide inlet (14) and/or at least one outlet valve (7) connected to the carbon dioxide outlet (15). With said valves (4, 7), internal pressure of the high-pressure container (1) can be maintained at desired level (under a pressure allowing carbon dioxide to transform into the supercritical phase) during the adsorption process.

In another preferred embodiment of the invention, the said temperature regulation unit (6) is a circulation type unit. In this embodiment, the high-pressure container (1) comprises at least one fluid inlet (11) through which fluid coming from the temperature regulation unit (6) is received; at least one circulation line (not shown) wherein the said fluid is circulated therein so as to allow heat exchange with the high-pressure container (1), and at least one fluid outlet (12) through which the fluid exiting the high-pressure container (1) is transferred into the temperature regulation unit (6).

In another preferred embodiment of the invention, the synthesis system (S) comprises at least one temperature sensor (8) measuring the temperature of the high-pressure container (1). The temperature of the high-pressure container (1) is measured by the temperature sensor (8) preferably in the form of a metal pair. In line with the internal temperature of the high-pressure container (1), operation of the temperature regulation unit (6) is controlled so that the high-pressure container is maintained at a desired temperature level (i.e. at a temperature allowing carbon dioxide to transform into the supercritical phase).

In the synthesis system (S) used in the catalyst synthesis method of the present invention, carbon dioxide in the supercritical phase is used as the solvent. The thermo-physical properties of the supercritical carbon dioxide, as in other fluids in the supercritical phase, are liquid-like density and gas-like viscosity values. These properties may vary in a wide range due to slight changes in the temperature and pressure, close to the critical point of the carbon dioxide. The liquid-like density imparts the supercritical fluid the required dissolution capacity whereas gas-like viscosity values provide a higher diffusion rate than liquids. For these reasons, the fluids in the supercritical phase, with their favorable effect on the mass transfer due to the high dissolution capacity as well as their low viscosity, are advantageous, when used as solvents, in improving deposition kinetics as opposed to other conventional solvent methods. Moreover, in the synthesis system (S) used in the catalyst synthesis method according to the present invention, carbon dioxide that transforms from the supercritical phase into the gaseous phase is generated as waste. Therefore, the problem of disposal of waste is not encountered.

## Claims

1. A hydrocracking catalyst synthesis method using a synthesis system (S) comprising at least one high-pressure container (1) to receive the support material (17) and the metal precursor (18) and having at least one body (13) resistant to high pressure; at least one carbon dioxide source (2) for supplying carbon dioxide gas into the high-pressure container (1); at least one pump (3) for delivering the carbon dioxide supplied into the high-pressure container (1) under a pressure allowing it to transform into the supercritical phase; at least one temperature regulation unit (6) to regulate the temperature of the high-pressure container (1) so as to bring the carbon dioxide supplied to the high-pressure container (1) to a temperature allowing it to transform into the supercritical phase; at least one heating furnace to heat and to subject to calcination said support material (17) after the said metal precursor (18) is dissolved in the carbon dioxide in the supercritical phase and adsorbed into the support material (17) the synthesis method comprising the steps of
- introducing (a) the metal precursor (18) comprising nickel and/or tungsten, and support material (17) which is in the form of a zeolite pellet into the high-pressure container (1);
- supplying the carbon dioxide received from the carbon dioxide source (2) by means of the pump (3) into the high-pressure container (1) at a pressure allowing the carbon dioxide to transform into the supercritical phase;
- bringing the carbon dioxide in the high-pressure container (1) to a temperature allowing it to transform into the supercritical phase by means of the temperature regulation unit (6) so that the metal precursor (18) in the high-pressure container (1) is dissolved in carbon dioxide and adsorbed (b) by the support material (17);
- heating the support material (17) inside the said furnace and subjecting it to a calcination (c) process so as to allow the metal precursor (18) adsorbed by the support material (17) to oxidize.

2. A hydrocracking catalyst synthesis method according to claim 1, **characterized by** comprising the step of mixing the metal precursor (18) and carbon dioxide in the supercritical phase.

3. A hydrocracking catalyst synthesis method according to claim 1, **characterized in that** said support material (17) is in the form of a USY zeolite pellet.

4. A hydrocracking catalyst synthesis method according to claim 1, **characterized in that** the internal pressure of the high-pressure container (1) is measured by at least one pressure sensor (9) .

5. A hydrocracking catalyst synthesis method according to claim 1 **characterized in that** carbon dioxide in the supercritical form and located inside the high-pressure container (1) is mixed by at least one mixer (5) with the metal precursor (18).

6. A hydrocracking catalyst synthesis method according to claim 5, **characterized in that** said mixer (5) is in the form of a magnetic mixer.

7. A hydrocracking catalyst synthesis method (S) according to claim 1 **characterized in that** the temperature of the high-pressure container (1) is measured by at least one temperature sensor (8).

8. A hydrocracking catalyst synthesis method according to claim 7, **characterized in that** said temperature sensor (8) is in the form of a metal pair.

## Patentansprüche

1. Hydrocrack-Katalysatorsyntheseverfahren unter Verwendung eines Systems (S), das wenigstens einen Hochdruckbehälter (1), der zur Aufnahme von Trägermaterial (17) und Metallvorläufer (18) dient und der wenigstens ein hochdruckbeständiges Gehäuse (13) hat, wenigstens eine Kohlendioxidquelle (2) zur Zufuhr von Kohlendioxidgas in den Hochdruckbehälter (1), wenigstens eine Pumpe (3), um in den Hochdruckbehälter (1) zugeführtes Kohlendioxid unter einen Druck zu setzen, der es dem Gas ermöglicht, in die superkritische Phase überzugehen, wenigstens eine Temperaturregeleinheit (6), um die Temperatur des Hochdruckbehälters (1) zu regeln, um so das dem Hochdruckbehälter (1) zugeführte Kohlendioxid auf eine Temperatur zu bringen, die es ihm ermöglicht, in die superkritische Phase überzugehen, wenigstens einen Heizofen aufweist, um das Trägermaterial (17) aufzuheizen und kalzinieren zu lassen, nachdem der Metallvorläufer (18) in dem Kohlendioxid in superkritischer Phase gelöst und an dem Trägermaterial (17) adsorbiert ist, wobei das Syntheseverfahren die Schritte beinhaltet
- den Metallvorläufer (18), der Nickel und/oder Wolfram aufweist, und das Trägermaterial (17), das als Zeolith-Pellet vorliegt, in den Hochdruckbehälter (1) einzuführen (a),
- das aus der Kohlendioxidquelle (2) aufgenommene Kohlendioxid mittels der Pumpe (3) in den Hochdruckbehälter (1) unter einem Druck zu fördern, der es dem Kohlendioxid ermöglicht, in die superkritische Phase überzugehen,
- mittels der Temperaturregeleinheit (6) das Kohlendioxid in dem Hochdruckbehälter (1) auf eine Temperatur zu bringen, die es ihm ermöglicht, in die superkritische Phase überzugehen, so dass der Metallvorläufer (18) in dem Hochdruckbehälter (1) in Kohlendioxid gelöst und durch das Trägermaterial (17) absorbiert wird (b),
- das Trägermaterial (17) innerhalb des Ofens zu erhitzen und es einem Kalzinierungsprozess (c) zu unterziehen, um so zu ermöglichen, dass der an dem Trägermaterial (17) adsorbierte Metallvorläufer (18) oxidiert.

2. Hydrocrack-Katalysatorsyntheseverfahren nach Anspruch 1, **dadurch gekennzeichnet, dass** es den Schritt des Mischens des Metallvorläufers (18) und des Kohlendioxids in der superkritischen Phase aufweist.

3. Hydrocrack-Katalysatorsyntheseverfahren nach Anspruch 1, **dadurch gekennzeichnet, dass** das Trägermaterial (17) in Form von USY-Zeolith-Pellets vorliegt.

4. Hydrocrack-Katalysatorsyntheseverfahren nach Anspruch 1, **dadurch gekennzeichnet, dass** der Innendruck des Hochdruckbehälters (1) durch wenigstens einen Drucksensor (9) gemessen wird.

5. Hydrocrack-Katalysatorsyntheseverfahren nach Anspruch 1, **dadurch gekennzeichnet, dass** das in der superkritischen Form und innerhalb des Hochdruckbehälters (1) befindliche Kohlendioxid durch wenigstens einen Mischer (5) mit dem Metallvorläufer (18) gemischt wird.

6. Hydrocrack-Katalysatorsyntheseverfahren nach Anspruch 5, **dadurch gekennzeichnet, dass** der Mischer (5) die Form eines magnetischen Mischers hat.

7. Hydrocrack-Katalysatorsyntheseverfahren (S) nach Anspruch 1, **dadurch gekennzeichnet, dass** die Temperatur des Hochdruckbehälters (1) durch wenigstens einen Temperatursensor (8) gemessen wird.

8. Hydrocrack-Katalysatorsyntheseverfahren nach Anspruch 7, **dadurch gekennzeichnet, dass** der Temperatursensor (8) die Form eines Metallpaars hat.

## Revendications

1. Procédé de synthèse de catalyseur d'hydrocraquage utilisant un système de synthèse (S) comprenant au moins un contenant à haute pression (1) pour recevoir le matériau de support (17) et le précurseur métallique (18) et présentant au moins un corps (13) résistant à une pression élevée ; au moins une source de dioxyde de carbone (2) pour fournir du dioxyde de carbone gazeux au contenant à haute pression (1); au moins une pompe (3) pour délivrer le dioxyde de carbone fourni au contenant à haute pression (1) sous une pression lui permettant de se transformer en la phase supercritique ; au moins une unité de régulation de température (6) pour réguler la température du contenant à haute pression (1) de manière à amener le dioxyde de carbone fourni au contenant à haute pression (1) à une température lui permettant de se transformer en la phase supercritique ; au moins un four de chauffage pour chauffer et pour soumettre à une calcination ledit matériau de support (17) après que ledit précurseur métallique (18) a été dissous dans le dioxyde de carbone dans la phase supercritique et adsorbé dans le matériau de support (17), le procédé de synthèse comprenant la étapes consistant à
- introduire (a) le précurseur métallique (18) comprenant du nickel et/ou du tungstène et un matériau de support (17) qui est sous la forme d'une pastille de zéolite dans le contenant à haute pression (1) ;
- introduire le dioxyde de carbone reçu de la source de dioxyde de carbone (2) au moyen de la pompe (3) dans le contenant à haute pression (1) à une pression permettant au dioxyde de carbone de se transformer en la phase supercritique ;
- amener le dioxyde de carbone dans le contenant à haute pression (1) à une température lui permettant de se transformer en la phase supercritique au moyen de l'unité de régulation de température (6), de sorte que le précurseur métallique (18) dans le contenant à haute pression (1) est dissous dans du dioxyde de carbone et adsorbé (b) par le matériau de support (17) ;
- chauffer le matériau de support (17) à l'intérieur dudit four et le soumettre à un processus de calcination (c) de manière à permettre au précurseur métallique (18) adsorbé par le matériau de support (17) de s'oxyder.

2. Procédé de synthèse de catalyseur d'hydrocraquage selon la revendication 1, **caractérisé en ce qu'**il comprend l'étape consistant à mélanger le précurseur métallique (18) et le dioxyde de carbone dans la phase supercritique.

3. Procédé de synthèse de catalyseur d'hydrocraquage selon la revendication 1, **caractérisé en ce que** ledit matériau de support (17) est sous la forme d'une pastille de zéolithe USY.

4. Procédé de synthèse de catalyseur d'hydrocraquage selon la revendication 1, **caractérisé en ce que** la pression interne du contenant à haute pression (1) est mesurée par au moins un capteur de pression (9).

5. Procédé de synthèse de catalyseur d'hydrocraquage selon la revendication 1, **caractérisé en ce que** le dioxyde de carbone sous la forme supercritique et situé à l'intérieur du contenant à haute pression (1) est mélangé par au moins un mélangeur (5) avec le précurseur métallique (18).

6. Procédé de synthèse de catalyseur d'hydrocraquage selon la revendication 5, **caractérisé en ce que** ledit mélangeur (5) est sous la forme d'un mélangeur magnétique.

7. Procédé de synthèse de catalyseur d'hydrocraquage (S) selon la revendication 1, **caractérisé en ce que** la température du contenant à haute pression (1) est mesurée par au moins un capteur de température (8).

8. Procédé de synthèse de catalyseur d'hydrocraquage selon la revendication 7, **caractérisé en ce que** ledit capteur de température (8) est sous la forme d'une paire métallique.
